# EUROPÄISCHE PATENTSCHRIFT

(11) **EP 2 699 833 B1**
(45) Veröffentlichungstag und Bekanntmachung des Hinweises auf die Patenterteilung: **16.11.2016**
(21) Anmeldenummer: 11797188.7
(22) Anmeldetag: 09.12.2011
(51) Int. Cl.: F16L 25/01

(54) **ON-BOARD-DIAGNOSEEINHEIT FÜR EIN KRAFTFAHRZEUG**
ON-BOARD DIAGNOSIS UNIT FOR A VEHICLE
UNITÉ DE DIAGNOSE POUR UN VEHICULE

(30) Priorität: 16.04.2011 DE 102011017324
(43) Veröffentlichungstag der Anmeldung: 26.02.2014
(73) Patentinhaber: Daimler AG, 70327 Stuttgart (DE)
(72) Erfinder: WIDMANN, Matthias, 73061 Ebersbach (DE); SCHÖLLKOPF, Bernd, 73066 Uhingen (DE); ACHENBACH, Karl-Jörg, 70734 Fellbach (DE)
(74) Vertreter: JENSEN & SON
(86) Internationale Anmeldenummer: PCT/EP2011/006206
(87) Internationale Veröffentlichungsnummer: WO 2012/143026

(56) Entgegenhaltungen:
- DE-U1-202004 002 116
- US-A1- 2002 058 436
- US-A1- 2006 216 979

## Beschreibung

Die Erfindung betrifft eine On-Board-Diagnoseeinheit nach dem Oberbegriff des Anspruchs 1.

Aus der DE 198 31 372 A1 ist bereits eine Diagnoseeinheit zur Erkennung einer gelösten mechanischen Verbindung, mit wenigstens einem ersten Kontaktelement und wenigstens einem axial beabstandeten zweiten Kontaktelement, von denen zumindest eines dazu vorgesehen ist, zur Kontaktierung wenigstens an zumindest einer Verbindungsstelle der mechanischen Verbindung zumindest im Wesentlichen elastisch verformt zu werden, bekannt.

Der Erfindung liegt insbesondere die Aufgabe zugrunde, eine kostengünstige On-Board-Diagnoseeinheit bereitzustellen. Diese Aufgabe wird gemäß der Erfindung durch die Merkmale des Anspruchs 1 gelöst. Weitere Ausgestaltungen ergeben sich aus den Unteransprüchen.

Die Erfindung geht aus von einer On-Board-Diagnoseeinheit für ein Kraftfahrzeug zur Erkennung einer gelösten mechanischen Verbindung zwischen zumindest zwei strömungstechnischen Leitungen, mit wenigstens einem ersten Kontaktelement, das ein elektrischer Leiter ist, und wenigstens einem axial beabstandeten zweiten Kontaktelement, das ein elektrischer Leiter ist, von denen zumindest eines dazu vorgesehen ist, zur Kontaktierung wenigstens an zumindest einer Verbindungsstelle der mechanischen Verbindung zumindest im Wesentlichen elastisch verformt zu werden.

Es wird vorgeschlagen, dass die On-Board-Diagnoseeinheit zumindest ein drittes Kontaktelement, das ein elektrischer Leiter ist und das axial beabstandet zu dem zweiten Kontaktelement angeordnet ist, wobei das dritte Kontaktelement dazu vorgesehen ist, zur Kontaktierung des Kontaktelements an der Verbindungstelle durch die Verbindungskraft der mechanischen Verbindung elastisch verformt zu werden, wodurch ein Strom von dem ersten Kontaktelement über das zweite Kontaktelement auf das dritte Kontaktelement fließen kann. Dadurch kann eine einfache und kostengünstige On-Board-Diagnoseeinheit bereitgestellt werden, mittels der ein Lösen der beiden strömungstechnischen Leitungen voneinander einfach diagnostiziert werden kann, wodurch für ein Kraftfahrzeug ein einfaches Diagnosesystem mit einer zuverlässigen Erkennung gelöster strömungstechnischer Leitungen, insbesondere eine zuverlässige Erkennung eines Entweichens von Blow-By-Gasen, bereitgestellt werden kann. Insbesondere kann dadurch eine besonders einfache und zuverlässige Überwachung von Mehrfachverbindungen und damit eine Überwachung mehrerer Verbindungsstellen gleichzeitig, aber getrennt voneinander, realisiert werden, wodurch eine kostengünstige On-Board-Diagnoseeinheit bereitgestellt werden kann, mittels der insbesondere OBD-Anforderungen erfüllt werden können. Unter einer "On-Board-Diagnoseeinheit" soll insbesondere eine Einheit verstanden werden, die bei einem Fehler, und damit bei einer gelösten Verbindung, einem Fahrer und/oder einem Monteur des Kraftfahrzeugs, beispielsweise mittels einer Kontrollleuchte im Sichtbereich des Fahrers und/oder des Monteurs, sofort einen Fehler signalisiert. Unter einem "Kontaktelement" soll insbesondere ein elektrischer Leiter verstanden werden, der vorzugsweise aus einem Metall ausgebildet ist. Unter einer "Verbindungsstelle" soll insbesondere eine Stelle verstanden werden, an der die zwei strömungstechnischen Leitungen miteinander insbesondere form- und/oder kraftschlüssig verbunden sind und/oder die insbesondere zur form- und/oder kraftschlüssigen Verbindung der beiden strömungstechnischen Leitungen zur Aufnahme von zumindest einem Verbindungselement vorgesehen ist. Unter "zumindest im Wesentlichen elastisch" soll in diesem Zusammenhang insbesondere verstanden werden, dass eine Abweichung von einer rein elastischen Verformung insbesondere weniger als 20%, vorzugsweise weniger als 10% und besonders bevorzugt weniger als 5% beträgt. Unter "axial beabstandet" soll in diesem Zusammenhang insbesondere ein axialer Abstand zwischen zwei Kontaktelementen bezüglich der Verbindungsstelle und damit bezüglich des Verbindungselements verstanden werden. Die Bezeichnungen "erste, zweite und dritte" sollen in diesem Zusammenhang insbesondere eine Reihenfolge von elektrisch in Reihe angeordneten Kontaktelementen kennzeichnen, nach der bei einem Betrachten der Kontaktelemente an einer Verbindungsstelle ein elektrischer Strom durch die zumindest drei Kontaktelemente fließt, wobei insbesondere ein erstes Kontaktelement das Kontaktelement ist, das entlang eines Stromflusses vor dem zweiten Kontaktelement und das zweite Kontaktelement das Kontaktelement ist, das entlang des Stromflusses vor dem dritten Kontaktelement angeordnet ist. Unter "bei einem Betrachten der Kontaktelemente an einer Verbindungsstelle" soll insbesondere verstanden werden, dass, je nachdem welche Verbindungsstelle betrachtet wird, sich die Bezeichnung der Kontaktelemente ändert, wobei bei einen Betrachten einer bezüglich des Stromflusses nächsten Verbindungsstelle ein drittes Kontaktelement zu einem ersten Kontaktelement wird und somit das erste Kontaktelement der einen Verbindungsstelle und das dritte Kontaktelement der anderen Verbindungsstelle einstückig, d.h. als ein und das selbe Bauteil ausgebildet sind. Unter "vorgesehen" soll insbesondere speziell ausgelegt, ausgestattet und/oder angeordnet verstanden werden.

Weiter wird vorgeschlagen, dass das zumindest eine erste Kontaktelement und das zumindest eine dritte Kontaktelement mit einem Umfangsabstand zueinander angeordnet sind. Dadurch können das erste Kontaktelement und das zweite Kontaktelement konstruktiv einfach elektrisch voneinander entkoppelt werden, wodurch insbesondere die zumindest eine Verbindungsstelle besonders einfach überwacht werden kann. Unter einem "Umfangsabstand" soll in diesem Zusammenhang insbesondere ein Abstand zwischen zwei Kontaktelementen um eine Achse der Verbindungsstelle und damit um eine Achse des Verbindungselements verstanden werden, wobei die zwei Kontaktelemente insbesondere in einer gleichen Ebene angeordnet sind.

Außerdem wird vorgeschlagen, dass die On-Board-Diagnoseeinheit wenigstens ein Isolationselement aufweist, das jeweils teilweise zwischen den axial beabstandeten Kontaktelementen angeordnet ist und dazu vorgesehen ist, die axial beabstandeten Kontaktelemente elektrisch voneinander zu entkoppeln. Dadurch können konstruktiv einfach die axial beabstandeten Kontaktelemente elektrisch voneinander entkoppelt werden. Unter einem "Isolationselement" soll insbesondere ein elektrischer Nichtleiter verstanden werden. Unter "zwischen den axial beabstandeten Kontaktelementen angeordnet" soll insbesondere eine axiale Anordnung zwischen den axial beabstandeten Kontaktelementen verstanden werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine On-Board-Diagnoseeinheit, die an einer strömungstechnischen Leitung angeordnet ist,
- Fig. 2: die On-Board-Diagnoseeinheit mit einer Detektionseinheit schematisiert dargestellt,
- Fig. 3: einen vergrößerten Ausschnitt der On-Board-Diagnoseeinheit und
- Fig. 4: einen vergrößerten Ausschnitt der On-Board-Diagnoseeinheit, die zwischen zwei strömungstechnischen Leitungen angeordnet ist.

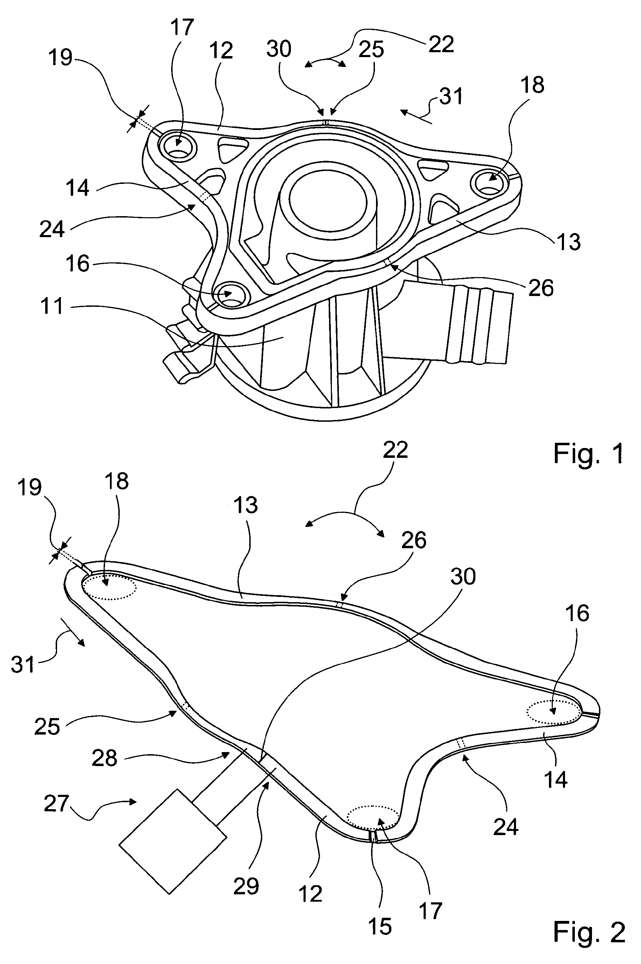

Die Figuren 1 bis 4 zeigen eine On-Board-Diagnoseeinheit für ein Kraftfahrzeug zur Erkennung einer gelösten mechanischen Verbindung zwischen zumindest zwei strömungstechnischen Leitungen 10, 11. Die strömungstechnischen Leitungen 10, 11 sind dazu vorgesehen, Blow-By-Gase aus einem Verbrennungsmotor des Kraftfahrzeugs auszuleiten. Sie werden durch ein Blow-By-Gas durchströmt. Die zwei Leitungen 10, 11 sind dabei mittels nicht näher dargestellter Verbindungselemente der mechanischen Verbindung dicht miteinander verbunden. Die drei Verbindungselemente wirken jeweils an einer Verbindungsstelle 16, 17, 18 der mechanischen Verbindung. Sie wirken an einem, mit der Leitung 11 einstückig ausgebildeten Dreilochflansch. Die Verbindungselemente sind als Schrauben ausgebildet. Somit ist die mechanische Verbindung als eine Schraubverbindung ausgebildet. Die strömungstechnische Leitung 11 ist als ein Öleinfüllstutzen und die strömungstechnische Leitung 10 als eine Zylinderkopfhaube ausgebildet. Grundsätzlich kann die mechanische Verbindung auch als eine Nietverbindung oder Ähnliches ausgebildet werden.

Die On-Board-Diagnoseeinheit weist vier Kontaktelemente 12, 13, 14, 15 auf. Zur elektrischen Entkopplung der Kontaktelemente 12, 13, 14 von dem Kontaktelement 15 sind die Kontaktelemente 12, 13, 14 axial beabstandet zu dem Kontaktelement 15 angeordnet. Die Kontaktelemente 12, 13, 14 weisen einen axialen Abstand 23, d.h. einen Abstand entlang der Strömungsrichtung des Blow-By-Gases, zu dem Kontaktelement 15 auf. Die Kontaktelemente 12, 13, 14 sind in einer gemeinsamen Ebene angeordnet. Zur Unterbrechung eines elektrischen Stromkreises entlang den Kontaktelementen 12, 13, 14 sind die benachbarten Kontaktelemente 12, 13, 14 jeweils mit einem Umfangsabstand 19 zueinander angeordnet. Der Umfangsabstand 19 ist als ein Abstand zwischen den benachbarten Kontaktelementen 12, 13, 14 um die Strömungsrichtung des Blow-By-Gases und damit um eine Achse des Verbindungselements an der Verbindungsstelle 16, 17, 18 ausgebildet. Die entlang einer Umfangsrichtung 22, d.h. entlang einer Richtung, die um eine Strömungsrichtung des Blow-By-Gases verläuft, benachbarten Kontaktelemente 12, 13, 14 weisen entlang der Umfangsrichtung 22 jeweils einen Abstand zueinander auf. Der Umfangsabstand 19 der benachbarten Kontaktelementen 12, 13, 14 ist jeweils an einer Verbindungsstelle 16, 17, 18 angeordnet. Der Umfangsabstand 19 zwischen den Kontaktelementen 13, 14 ist an der Verbindungsstelle 16, der Umfangsabstand 19 zwischen den Kontaktelementen 12, 14 an der Verbindungsstelle 17 und der Umfangsabstand 19 zwischen den Kontaktelementen 12, 13 an der Verbindungsstelle 18 angeordnet.

Zur Unterbrechung des elektrischen Stromkreises entlang dem Kontaktelement 15 weist das Kontaktelement 15 drei Entkopplungsstellen 24, 25, 26 auf, die das Kontaktelement 15 entlang der Umfangsrichtung 22 jeweils elektrisch entkoppeln. Die Entkopplungsstelle 24 ist entlang der Umfangsrichtung 22 zwischen den Verbindungsstellen 16, 17, die Entkopplungsstelle 25 zwischen den Verbindungsstelle 17, 18 und die Entkopplungsstelle 26 zwischen den Verbindungsstellen 16, 18 angeordnet. Die Kontaktelemente 12, 13, 14, 15 sind jeweils streifenförmig ausgebildet, d.h. sie weisen eine Haupterstreckungsrichtung auf, die Wesentlich größer ist als ihre Breite. Die Kontaktelemente 12, 13, 14, 15 weisen jeweils eine Haupterstreckungsrichtung auf, die mindestens 5-mal so groß, vorteilhaft mindestens 10-mal so groß und besonders vorteilhaft mindestens 20-mal so groß ist wie die jeweilige Breite. Die Kontaktelemente 12, 13, 14, 15 sind jeweils als ein Kontaktblech ausgebildet. In diesem Ausführungsbeispiel weisen die Kontaktelemente 12, 13, 14, 15 jeweils eine Stärke und damit eine axial verlaufende Höhe von 0,1 mm auf. Grundsätzlich kann das Kontaktelement 15 zur Unterbrechung des elektrischen Stromkreises auch mehrteilig, analog zu den Kontaktelementen 12, 13, 14, ausgebildet werden, wodurch das mehrteilige Kontaktelement 15 ebenfalls jeweils einen Umfangsabstand zwischen benachbarten Einzelteilen des Kontaktelements 15 aufweisen würde, die jeweils zwischen zwei Verbindungsstellen 16, 17, 18 angeordnet wären.

Zur Kontaktierung des axial beabstandeten Kontaktelements 15 sind die Kontaktelemente 12, 13, 14 jeweils an einer Verbindungsstelle 16, 17, 18 der mechanischen Verbindung dazu vorgesehen, elastisch verformt zu werden. Sie sind zur Kontaktierung des Kontaktelements 15 jeweils dazu vorgesehen, in einem Bereich des Umfangsabstands 19 elastisch verformt zu werden. Die Kontaktelemente 12, 13, 14 werden durch eine Verbindungskraft der als Schraubverbindung ausgebildeten mechanischen Verbindung und damit durch die Verbindungselemente jeweils an ihren Enden elastisch verformt und mit den Enden gegen das Kontaktelement 15 gedrückt, wodurch sie das Kontaktelement 15 kontaktieren. Natürlich können die Einzelteile eines mehrteilig ausgebildeten Kontaktelements 15 auch als kurze Kontaktelemente ausgebildet werden, die jeweils axial beabstandet an dem Umfangsabstand 19 der benachbarten Kontaktelemente 12, 13, 14 angeordnet sind und deren Haupterstreckungsrichtung grade einen Wert aufweist, so dass die Kontaktelemente 12, 13, 14 durch die elastische Verformung das entsprechende Einzelteil des mehrteiligen Kontaktelements 15 kontaktieren. Aus Festigkeitsgründen ist allerdings die oben beschriebene streifenförmige Ausbildung des Kontaktelements 15 vorzuziehen.

Zur Realisierung des axialen Abstands 23 weist die On-Board-Diagnoseeinheit drei Isolationselemente 20, 21 auf, wobei ein Isolationselement in den Figuren 1 bis 4 nicht sichtbar ist. Zur elektrischen Entkopplung der axial beabstandeten Kontaktelemente 12, 13, 14, 15 sind die Isolationselemente 20, 21 teilweise zwischen den axial beabstandeten Kontaktelementen 12, 13, 14, 15 angeordnet. Das Isolationselement 20 ist axial zwischen dem Kontaktelement 15 und dem Kontaktelement 12, das Isolationselement 21 axial zwischen dem Kontaktelement 15 und dem Kontaktelement 14 und das nicht sichtbare Isolationselement axial zwischen dem Kontaktelement 15 und dem Kontaktelement 13 angeordnet. Die Isolationselemente 20, 21 weisen ebenfalls, analog zu den Kontaktelementen 12, 13, 14, einen Umfangsabstand auf, wobei der Umfangsabstand der Isolationselemente 20, 21 größer ausgebildet ist als der Umfangsabstand 19. Der Umfangsabstand der Isolationselemente 20, 21 ist jeweils an einer Verbindungsstelle 16, 17, 18 und damit an einem Umfangsabstand 19 der Kontaktelemente 12, 13, 14 angeordnet, so dass die Kontaktelemente 12, 13, 14 durch die Verbindungskraft der mechanischen Verbindung mit ihren Enden das Kontaktelement 15 kontaktieren können. Die Isolationselemente 20, 21 sind jeweils zwischen die axial beabstandeten Kontaktelementen 12, 13, 14, 15 geklebt. Die Isolationselemente 20, 21 sind elastisch ausgebildet. Sie sind jeweils als ein Elastomer ausgebildet. Grundsätzlich können die Isolationselemente 20, 21 auch zwischen die jeweiligen Kontaktelemente 12, 13, 14, 15 eingespritzt werden. In diesem Ausführungsbeispiel weisen die Isolationselemente 20, 21 jeweils eine Stärke und damit eine axial verlaufende Höhe von 0,2 mm auf. In einem unbelasteten Zustand der Isolationselemente 20, 21 weisen die Kontaktelemente 12, 13, 14 zu dem Kontaktelement 15 somit jeweils einen axialen Abstand 23 von 0,2 mm auf.

Die Kontaktelemente 12, 13, 14, 15 und die Isolationselemente 20, 21 der On-Board-Diagnoseeinheit weisen einen gleichen Verlauf auf. Die Kontaktelemente 12, 13, 14, 15 und die Isolationselemente 20, 21 sind zwischen den beiden Leitungen 10, 11 angeordnet. Sie verlaufen entlang der Umfangsrichtung 22 um alle drei Verbindungsstellen 16, 17, 18. Sie verlaufen außen an dem Dreilochflansch. Die Kontaktelemente 12, 13, 14, 15 und die Isolationselemente 20, 21 umgeben die drei Verbindungstellen 16, 17, 18. Grundsätzlich können die Kontaktelemente 12, 13, 14, 15 und die Isolationselemente 20, 21 auch zwischen einer der Leitungen 10, 11 und den Verbindungselementen angeordnet sein.

Zur separaten Überwachung von allen drei Verbindungsstellen 16, 17, 18, und damit zur Erkennung eines gelösten, defekten oder falsch angebrachten Verbindungselements der mechanischen Verbindung, weist die On-Board-Diagnoseeinheit eine Detektionseinheit 27 auf. Die Detektionseinheit 27 ist zur Bereitstellung des elektrischen Stromflusses dazu vorgesehen, eine Messspannung lediglich an eines der Kontaktelemente 12, 13, 14 anzulegen. In diesem Ausführungsbeispiel legt die Detektionseinheit 27 die Messspannung lediglich an das Kontaktelement 12 an. Dazu weist die Detektionseinheit 27 zwei elektrische Pole 28, 29 auf, die elektrisch mit dem Kontaktelement 12 verbunden sind. Zur Vermeidung eines direkten Stromflusses zwischen den beiden Polen 28, 29 weist das Kontaktelement 12 zwischen den beiden Polen 28, 29 eine elektrische Entkopplung 30 auf. Ein beispielhafter Strom kann dabei nur fließen, wenn durch die Verbindungskraft der mechanischen Verbindung alle Enden der Kontaktelemente 12, 13, 14 das Kontaktelement 15 kontaktieren und damit alle als Schrauben ausgebildeten Verbindungselemente angezogen sind, wodurch sich ein geschlossener Stromkreis bildet. Das Kontaktelement 15 dient dabei als eine elektrische Brücke zwischen jeweils zwei benachbarten Kontaktelementen 12, 13, 14, die dazu jeweils die zwei mit dem Umfangsabstand 19 beabstandeten Enden der Kontaktelemente 12, 13, 14 elektrisch miteinander verbindet. Dabei fließt der Strom jeweils von einem Kontaktelement 12, 13, 14 auf das Kontaktelement 15 und von dem Kontaktelement 15 weiter auf das entsprechende benachbarte Kontaktelement 12, 13, 14.

Wenn auch nur eines der Enden der Kontaktelemente 12, 13, 14 sich von dem Kontaktelement 15 entfernt und damit nicht mehr kontaktiert, ist der Stromkreis zwischen den Polen 28, 29 unterbrochen und damit geöffnet, wodurch die Detektionseinheit 27 eine gelöste Verbindung erkennt. Die Detektionseinheit 27 signalisiert die gelöste Verbindung durch eine, in einem Fahrgastraum des Kraftfahrzeugs angebrachte Kontrollleuchte der On-Board-Diagnoseeinheit, wodurch frühzeitig ein Fehler der Verbindung erkannt und so ein Schaden reduziert werden kann. Dadurch wird die Verbindung der als Öleinfüllstutzen ausgebildeten Leitung 11 mit der als Zylinderkopfhaube ausgebildeten Leitung 12 überwacht, wodurch ein Entweichen von dem Blow-By-Gas verhindert und eine korrekte Montage kontrolliert werden kann. Grundsätzlich kann das Kontaktelement 12 zur Vermeidung des direkten Stromflusses zwischen den beiden Polen, 28, 29 auch zweitteilig ausgebildet sein und damit einen Umfangsabstand aufweisen, der zwischen den beiden Polen 28, 29 angeordnet ist und somit die elektrische Entkopplung 30 ersetzt.

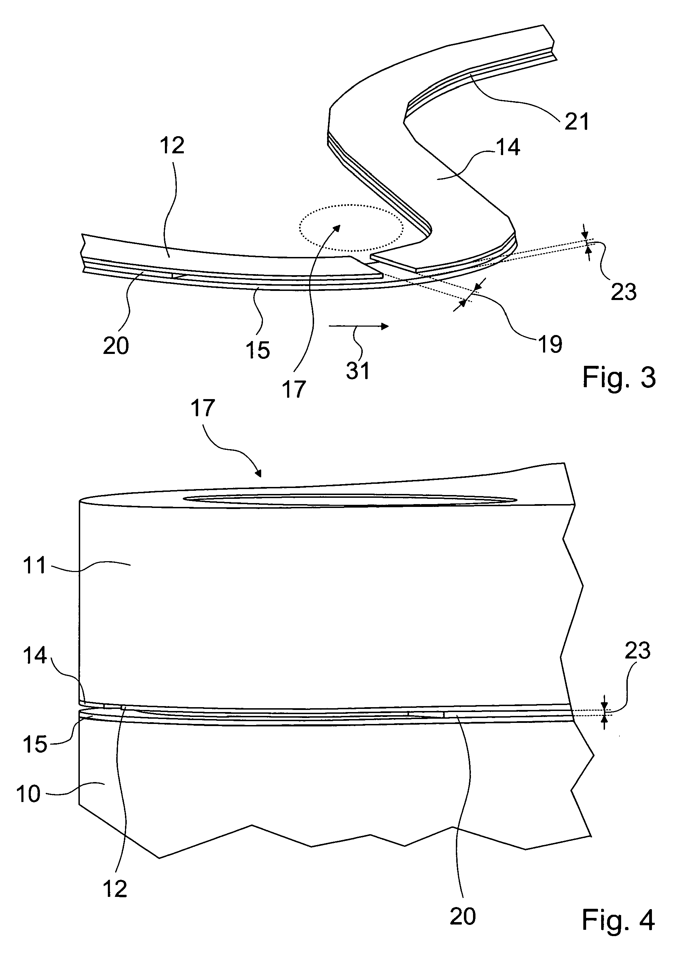

Im Folgenden wird die Funktionsweise der On-Board-Diagnoseeinheit an der Verbindungsstelle 17 näher erläutert (vgl. dazu insbesondere die Fig. 3). Die On-Board-Diagnoseeinheit weist zur Erkennung des gelösten als Schraube ausgebildeten Verbindungselements in der Verbindungsstelle 17 zwischen den zwei strömungstechnischen Leitungen 10, 11 das erste Kontaktelement 12 und das zu dem ersten Kontaktelement 12 axial beabstandete zweite Kontaktelement 15 auf, von denen das Kontaktelement 12 dazu vorgesehen ist, zur Kontaktierung des Kontaktelements 15 an der Verbindungsstelle 17 durch das Verbindungselement und damit durch die Verbindungskraft der mechanischen Verbindung elastisch verformt zu werden. Die On-Board-Diagnoseeinheit umfasst weiter das dritte Kontaktelement 14, das axial beabstandet zu dem zweiten Kontaktelement 15 angeordnet ist. Das erste Kontaktelement 12 und das dritte Kontaktelement 14 sind in einer gleichen Ebene angeordnet. Das dritte Kontaktelement 14 ist ebenfalls dazu vorgesehen, zur Kontaktierung des Kontaktelements 15 an der Verbindungsstelle 17 durch das Verbindungselement der mechanischen Verbindung elastisch verformt zu werden, wodurch ein Strom von dem ersten Kontaktelement 12 über das zweite Kontaktelement 15 auf das dritte Kontaktelement 14 fließen kann. Der Strom weist dabei eine Stromrichtung 31 auf. Das zweite Kontaktelement 15 dient als eine elektrische Brücke, die zur Schließung des Stromkreises die zwei durch den Umfangsabstand 19 getrennten Enden der Kontaktelemente 12, 14 elektrisch verbindet. Die Bezeichnungen "erste", "zweite" und "dritte" stellen dabei eine Fließrichtung des Stroms dar, wobei der Strom zuerst entlang dem ersten Kontaktelement 12, dann entlang dem zweiten Kontaktelement 15 und anschließend entlang dem dritten Kontaktelement 14 fließt.

Natürlich kann sich die Bezeichnung ändern, wie beispielsweise bei einer Umpolung der Detektionseinheit 27. Dabei ändert sich die Stromrichtung 31, wodurch das Kontaktelement 14 als das erste Kontaktelement 14 und das Kontaktelement 12 als das dritte Kontaktelement 12 ausgebildet ist. Die Funktionsweise an den anderen Verbindungsstellen 16, 18 ist dabei analog, wobei sich die Bezeichnungen "erste" und "dritte" verschieben. Bei der Stromrichtung 31 ist das Kontaktelement 14 an der Verbindungsstelle 16 dann als das erste Kontaktelement 14 und das Kontaktelement 13 als das dritte Kontaktelement 13 ausgebildet.

## Patentansprüche

1. On-Board-Diagnoseeinheit für ein Kraftfahrzeug zur Erkennung einer gelösten mechanischen Verbindung zwischen zumindest zwei strömungstechnischen Leitungen (10, 11 ), mit wenigstens einem ersten Kontaktelement (12, 13, 14), das ein elektrischer Leiter ist, und wenigstens einem axial beabstandeten zweiten Kontaktelement (15), das ein elektrischer Leiter ist, von denen zumindest eines dazu vorgesehen ist, zur Kontaktierung wenigstens an zumindest einer Verbindungsstelle (16, 17, 18) der mechanischen Verbindung zumindest im Wesentlichen elastisch verformt zu werden,
**gekennzeichnet durch**
zumindest ein drittes Kontaktelement (12, 13, 14), das ein elektrischer Leiter ist und das axial beabstandet zu dem zweiten Kontaktelement (15) angeordnet ist,
wobei das zumindest eine erste Kontaktelement (12, 13, 14) und das zumindest eine dritte Kontaktelement (12, 13, 14) zur Unterbrechung eines elektrischen Stromkreises mit einem um die zumindest eine Verbindungsstelle (16, 17, 18) verlaufenden Umfangsabstand (19) zueinander angeordnet sind, wobei
das dritte Kontaktelement (14) dazu vorgesehen ist, zur Kontaktierung des Kontaktelements (15) an der Verbindungstelle (16, 17, 18) **durch** die Verbindungskraft der mechanischen Verbindung elastisch verformt zu werden,
wodurch ein Strom von dem ersten Kontaktelement (12) über das zweite Kontaktelement (15) auf das dritte Kontaktelement (14) fließen kann.

2. On-Board-Diagnoseeinheit nach Anspruch 1,
**dadurch gekennzeichnet, dass**
das zumindest eine erste Kontaktelement (12, 13, 14) und das zumindest eine dritte Kontaktelement (12, 13, 14) in einer gleichen Ebene angeordnet sind.

3. On-Board-Diagnoseeinheit nach Anspruch 1,
**gekennzeichnet durch**
wenigstens ein Isolationselement (20, 21), das ein elektrischer Nichtleiter ist und das jeweils teilweise zwischen den axial beabstandeten Kontaktelementen (12, 13, 14, 15) angeordnet ist und dazu vorgesehen ist, die axial beabstandeten Kontaktelemente (12, 13, 14, 15) elektrisch voneinander zu entkoppeln.

4. On-Board-Diagnoseeinheit nach Anspruch 2,
**dadurch gekennzeichnet, dass**
das erste Kontaktelement (12, 13, 14) ein Ende aufweist, das einem Ende des dritten Kontaktelements (12, 13, 14) gegenüberliegt, wobei die Kontaktelemente (12, 13, 14) durch eine Verbindungskraft der mechanischen Verbindung jeweils an ihren Enden elastisch verformbar sind und dadurch gegen das axial beabstandete zweite Kontaktelement (15) gedrückt werden können.

5. On-Board-Diagnoseeinheit nach Anspruch 4,
**dadurch gekennzeichnet, dass**
das zweite Kontaktelement (15) als eine elektrische Brücke dient, die zur Schließung des elektrischen Stromkreises die zwei durch den Umfangsabstand (19) getrennten Enden der Kontaktelemente (12, 13, 14) elektrisch verbindet.

6. On-Board-Diagnoseeinheit nach Anspruch 5,
**gekennzeichnet durch**
eine Detektionseinheit (27), die zum Anlegen einer Messspannung zwei elektrische Pole (28, 29) aufweist, die elektrisch mit einem der Kontaktelemente (12) verbunden sind.

7. On-Board-Diagnoseeinheit nach Anspruch 6,
**dadurch gekennzeichnet, dass**
die Detektionseinheit (27) eine gelöste Verbindung erkennt, wenn der elektrische Stromkreis durch eine fehlende Kontaktierung zwischen einem der Enden der Kontaktelemente (12, 13, 14) und dem axial beabstandeten zweiten Kontaktelement (15) unterbrochen ist.

8. On-Board-Diagnoseeinheit nach Anspruch 2,
**dadurch gekennzeichnet, dass**
die Kontaktelemente (12, 13, 14, 15) jeweils streifenförmig ausgebildet sind.

## Claims

1. On-board diagnostic unit for a motor vehicle for detecting an undone mechanical connection between at least two fluid mechanics-related lines (10, 11 ), the unit comprising at least one first contact element (12, 13, 14) which is an electric conductor and at least one axially spaced second contact element (15) which is an electric conductor, of which at least one is provided to be at least substantially elastically deformed for contacting in at least one connecting position (16, 17, 18) of the mechanical connection,
**characterised by**
at least one third contact element (12, 13, 14) which is an electric conductor and located at an axial distance from the second contact element (15), wherein the least one first contact element (12, 13, 14) and the at least one third contact element (12, 13, 14) are arranged at a circumferential distance (19) extending around the at least one connecting position (16, 17, 18) from one another to interrupt an electric circuit, wherein the third contact element (14) is provided to be elastically deformed by the connecting force of the mechanical connection for contacting the contact element (15) at the connecting position (16, 17, 18), as a result of which a current can flow from the first contact element (12) via the second contact element (15) to the third contact element (14).

2. On-board diagnostic unit according to claim 1,
**characterised in that**
the least one first contact element (12, 13, 14) and the at least one third contact element (12, 13, 14) are located in a same plane.

3. On-board diagnostic unit according to claim 1,
**characterised by**
at least one insulation element (20, 21) which is an electric insulator and in each case partially arranged between the axially spaced contact elements (12, 13, 14, 15), and which is provided to decouple the axially spaced contact elements (12, 13, 14, 15) from one another electrically.

4. On-board diagnostic unit according to claim 2,
**characterised in that**
the first contact element (12, 13, 14) has an end which is located opposite an end of the third contact element (12, 13, 14), wherein the contact elements (12, 13, 14) are elastically deformable at their ends by a connecting force of the mechanical connection and can therefore be pushed against the axially spaced second contact element (15).

5. On-board diagnostic unit according to claim 4,
**characterised in that**
the second contact element (15) serves as an electric bridge which electrically connects the two ends of the contact elements (12, 13, 14) separated by the circumferential distance (19) to close the electric circuit.

6. On-board diagnostic unit according to claim 5,
**characterised by**
a detection unit (27) having two electric poles (28, 29) electrically connected to one of the contact elements (12) for applying a measuring voltage.

7. On-board diagnostic unit according to claim 6,
**characterised in that**
the detection unit (27) detects an undone connection if the electric circuit is broken because of a lacking contact between one of the ends of the contact elements (12, 13, 14) and the axially spaced second contact element (15).

8. On-board diagnostic unit according to claim 2,
**characterised in that**
each of the contact elements (12, 13, 14) is strip-shaped.

## Revendications

1. Unité de diagnostic embarqué pour un véhicule automobile destiné à la reconnaissance d'une liaison mécanique déverrouillée entre au moins deux conduites d'écoulement (10, 11 ), comprenant au moins un premier élément de contact (12, 13, 14) qui est un conducteur électrique, et au moins un second élément de contact (15) éloigné axialement, qui est un conducteur électrique, parmi lesquels au moins un est prévu pour se déformer au moins essentiellement élastiquement pour la mise en contact à au moins un point de liaison (16, 17, 18) de la liaison mécanique, **caractérisée en ce qu'**au moins un troisième élément de contact (12, 13, 14) qui est un conducteur électrique et qui est éloigné axialement du deuxième élément de contact (15), l'au moins un premier élément de contact (12, 13, 14) et l'au moins un troisième élément de contact (12, 13, 14) destinés à l'interruption d'un circuit de courant électrique sont disposés les uns par rapport aux autres à un écart périphérique (19) s'étendant autour d'au moins un point de liaison (16, 17, 18), le troisième élément de contact (14) destiné à la mise en contact de l'élément de contact (15) avec le point de liaison (16, 17, 18) par la force de la liaison mécanique se déformant élastiquement, ce qui permet à un courant provenant du premier élément de contact (12) de circuler par le deuxième élément de contact (15) vers le troisième élément de contact (14).

2. Unité de diagnostic embarquée selon la revendication 1, **caractérisée en ce que** l'au moins un premier élément de contact (12, 13, 14) et l'au moins un troisième élément de contact (12, 13, 14) sont disposés dans un même plan.

3. Unité de diagnostic embarquée selon la revendication 1, **caractérisée en ce que** par au moins un élément d'isolation (20, 21), qui est un isolateur électrique et qui respectivement en partie est disposé entre les éléments de contact (12, 13, 14, 15) éloignés axialement, Et prévu pour désaccoupler électriquement les éléments de contacts (12, 13, 14, 15) les uns des autres.

4. Unité de diagnostic embarquée selon la revendication 2, **caractérisée en ce que** le premier élément de contact (12, 13, 14) présente une extrémité qui fait face à l'extrémité du troisième élément de contact (12, 13, 14), les éléments de contact (12, 13,14) pouvant être déformables élastiquement par une force de liaison de la liaison mécanique respectivement à leurs extrémité et ainsi pouvant être pressés contre le deuxième élément de contact (15) éloigné axialement..

5. Unité de diagnostic embarquée selon la revendication 4, **caractérisée en ce que** le deuxième élément de contact (15) sert de pont électrique qui relie électriquement les deux extrémités des éléments de contact (12, 13, 14) séparées par l'écart périphérique (19) pour fermer le circuit de courant électrique.

6. Unité de diagnostic embarquée selon la revendication 5, **caractérisée en ce qu'**une unité (27) de détection qui présente deux pôles électriques (28, 29) pour appliquer une tension de mesure, lesdits deux pôles sont reliées électriquement à l'un des éléments de contact (12).

7. Unité de diagnostic embarquée selon la revendication 6, **caractérisée en ce que** l'unité (27) de détection reconnaît une liaison déverrouillée lorsque le circuit de courant électrique est interrompue par une mise en contacte absente entre l'une des extrémités des éléments de contact (12, 13, 14, 15) et le deuxième élément de contact (15) éloigné axialement.

8. Unité de diagnostic embarquée selon la revendication 2, **caractérisée en ce que** les éléments de contact (12, 13, 14, 15) sont conçus respectivement en forme de bande.
